# EUROPÄISCHE PATENTSCHRIFT

(11) **EP 4 100 199 B1**
(45) Veröffentlichungstag und Bekanntmachung des Hinweises auf die Patenterteilung: **22.11.2023**
(21) Anmeldenummer: 20820885.0
(22) Anmeldetag: 07.12.2020
(51) Int. Cl.: B23K 26/38, B23K 26/70, B23K 26/382

(54) **LASERBOHREN ODER LASERSCHNEIDEN MIT VERBESSERTEM RÜCKRAUMSCHUTZ**
LASER DRILLING OR LASER CUTTING WITH IMPROVED REAR-SPACE PROTECTION
PERÇAGE PAR LASER OU DÉCOUPE AU LASER PRÉSENTANT UNE PROTECTION AMÉLIORÉE DE L'ESPACE ARRIÈRE

(30) Priorität: 07.02.2020 DE 102020201530
(43) Veröffentlichungstag der Anmeldung: 14.12.2022
(73) Patentinhaber: Robert Bosch GmbH, 70442 Stuttgart (DE)
(72) Erfinder: STADLER, Frank, 70469 Stuttgart-Feuerbach (DE)
(86) Internationale Anmeldenummer: PCT/EP2020/084867
(87) Internationale Veröffentlichungsnummer: WO 2021/155976

(56) Entgegenhaltungen:
- WO-A1-2004/060603
- WO-A1-2019/020741
- DE-A1- 19 908 630
- DE-A1-102013 218 196
- US-B1- 6 303 901

## Beschreibung

Die vorliegende Erfindung betrifft ein Verfahren zum Laserbohren oder Laserschneiden eines Werkstücks, bei dem ein Rückraum hinter dem Punkt, an dem der Laserstrahl das Werkstück durchdringt, besser vor der konzentrierten Einwirkung des Laserstrahls geschützt wird.

### Stand der Technik

Beim Laserbohren oder Laserschneiden eines Werkstücks wird das Material des Werkstücks mit sehr kurzen und dafür sehr intensiven Laserpulsen bestrahlt. Bei hinreichend hoher Momentanintensität werden die Elektronenhüllen von Atomen des Materials direkt ionisiert, so dass Material abgetragen werden kann, ohne übermäßig viel Wärme in das Werkstück einzubringen.

Wenn die Laserstrahlung das Werkstück an einer Stelle durchdrungen hat, kann sie ohne hinreichende Schutzmaßnahmen aus anderen Bereichen des Werkstücks ungewollt Material abtragen oder unkontrolliert in die Umgebung entweichen. Daher wird in der EP 3 013 517 B1 ein Verfahren zum Laserbohren oder Laserschneiden vorgeschlagen, bei dem in den Rückraum hinter dem Werkstück ein mit Nanopartikeln beladenes Fluid eingebracht wird. Die Energie der in den Rückraum eindringenden Laserstrahlung wird zum überwiegenden Teil in eine kollektive Anregung der Nanopartikel umgewandelt und auf diese Weise dissipiert. Die WO2019/020741 A1 (Basis für den Oberbegriff des Anspruchs 1) offenbart ein Verfahren zum Laserbohren oder Laserschneiden eines Werkstücks, bei dem sich in einem Rückraum hinter dem Werkstück ein Fluid mit dispergierten Partikeln befindet.

### Offenbarung der Erfindung

Im Rahmen der Erfindung wurde ein Verfahren nach Anspruch 1 zum Laserbohren oder Laserschneiden eines Werkstücks entwickelt. Bei diesem Verfahren wird Material des Werkstücks mit gepulster Laserstrahlung abgetragen. In einem in Strahlrichtung hinter einem zu durchdringenden Bereich des Werkstücks gelegenen Rückraum, in den die Laserstrahlung eindringt, wenn sie diesen Bereich durchdrungen hat, wird ein Fluid vorgelegt. Dieses Fluid verhindert den Durchgang der Laserstrahlung zumindest teilweise. Das Fluid umfasst Partikel, die in einem Lösungsmittel dispergiert sind.

Es werden Partikel gewählt, die unter der Wirkung der in den Rückraum eintretenden Laserstrahlung ein Plasma ausbilden, so dass dieses Plasma den Durchgang der Laserstrahlung zumindest teilweise verhindert.

Dabei ist der Begriff "Partikel" für sich genommen nicht einschränkend in Bezug auf deren Größe. Bei welcher Partikelgröße das benötigte Plasma gebildet wird, hängt beispielsweise vom Material der Partikel und von der Intensität der in den Rückraum eintretenden Laserstrahlung ab.

Weiterhin ist der Begriff "Partikel" nicht dahingehend einschränkend zu verstehen, dass das jeweilige Material bei Raumtemperatur im festen Aggregatzustand vorliegt. Beispielsweise können auch metallhaltige Tröpfchen, die bei Raumtemperatur flüssig sind, als Partikel fungieren. So lässt sich beispielsweise Gallium oder Galinstan unter der Einwirkung von Ultraschall in einem Lösungsmittel dispergieren.

Das Plasma wird durch eine sehr hohe Momentanintensität erzeugt, die zunächst Elektronen aus den Elektronenhüllen von Atomen der Partikel entfernt und diese Atome somit ionisiert. Später werden auch die verbliebenen Ionen aus den Partikeln abgetrennt, so dass die Ionen und die Elektronen insgesamt ein quasineutrales Plasma bilden. Das Plasma ist für weitere Laserstrahlung weitestgehend undurchlässig. Die mit weiteren Laserpulsen auftreffende Energie wird teilweise diffus reflektiert und/oder gestreut und teilweise absorbiert. Insbesondere der diffus reflektierte und/oder gestreute Anteil wird in einen großen Raumwinkel umgeleitet und kann so besonders effektiv abgeführt werden. Die Energiestromdichte des Laserpulses in der ursprünglichen Strahlrichtung kann hierdurch unter den Schwellwert vermindert werden, ab dem weiteres Material des Werkstücks abgetragen wird oder eine anderweitige thermische Schädigung des Werkstücks droht.

Wenn die Bestrahlung beendet wird, lagert sich ein Teil der abgetrennten Ionen wieder an den Partikeln an und kann erneut für die Ausbildung eines Plasmas verwendet werden. Es gehen jedoch auch Ionen endgültig in das Fluid über und sind damit "verloren". Somit nutzen sich die Partikel mit der Zeit ab. Dies ist jedoch auch bei anderen partikelbasierten Ansätzen für den Rückraumschutz der Fall. Die Gesamtmenge an Laserenergie, deren Durchgang durch den Rückraum jede Formeleinheit des Materials der Partikel bis zu dem Zeitpunkt, zu dem sie nicht mehr verwendbar ist, verhindert hat, ist am größten, wenn in der beschriebenen Weise ein Plasma ausgebildet wird.

Weiterhin vergrößert das Plasma das Wechselwirkungsvolumen innerhalb des Fluids, in dem eine Ausbreitung der Laserstrahlung entlang des Strahlungspfads unterbunden wird. Dementsprechend stärker wird die Energiestromdichte in Richtung der ursprünglichen Strahlrichtung vermindert.

Grundsätzlich lassen sich Partikel jedes Materials zur Ausbildung eines Plasmas veranlassen, wenn die Momentanintensität der Laserstrahlung nur hoch genug ist. Für den Rückraumschutz entscheidend ist jedoch, ob die Ausbildung eines Plasmas genau bei derjenigen Momentanintensität, die nach dem Durchdringen der Laserstrahlung durch das Werkstück am Ort der Partikel entsteht, bereits stattfindet oder ob diese konkrete Momentanintensität zu niedrig ist, um diese konkreten Partikel zur Ausbildung eines Plasmas zu veranlassen. Die Momentanintensität ergibt sich aus den Parametern der Laserstrahlung, also insbesondere aus der Pulsenergie, aus der Pulsdauer, aus der Repetitionsrate und dem zeitlichen Verlauf der Pulse. Die minimale Momentanintensität, die für die Ausbildung eines Plasmas benötigt wird, ist wiederum durch Eigenschaften des jeweiligen Materials der Partikel in Kombination mit der Partikelgröße festgelegt. Für jedes Material und jede Partikelgröße ist die benötigte minimale Momentanintensität somit verfügbar. Das bedeutet im Umkehrschluss, dass der Fachmann in einer konkreten Anwendungssituation, in der eine bestimmte Momentanintensität in den Rückraum hinter dem Werkstück eintreten wird, gezielt Partikel auswählen kann, die unter dieser Momentanintensität ein Plasma ausbilden und somit eine unkontrollierte Ausbreitung der Laserstrahlung in scharf gebündelter Form verhindern.

Die Formulierung "es werden Partikel gewählt" ist generell nicht dahingehend einschränkend zu verstehen, dass das Fluid ausschließlich Partikel umfasst, die die jeweils angegebene Bedingung erfüllen. Es ist lediglich verlangt, dass Partikel vorhanden sind, die diese Bedingung erfüllen. Es ist jedoch nicht ausgeschlossen, dass im Fluid daneben noch andere Partikel vorhanden sind.

Beispielsweise kann anhand des zeitlichen Intensitätsverlaufs der Pulse ein Schwellwert für die Momentanintensität festgelegt werden. Dieser Schwellwert kann beispielsweise der Mittelwert der Intensität während des Pulses, ein bestimmter Prozentsatz der maximalen Intensität oder eine Intensität, die während eines bestimmten Anteils der Pulsdauer überschritten wird, sein. Es werden Partikel gewählt, die spätestens bei einer diesem Schwellwert entsprechenden Momentanintensität ein Plasma ausbilden.

Es kann zusätzlich auch eine Grenztemperatur festgelegt werden, und es können Partikel gewählt werden, die spätestens bei einer dem Schwellwert entsprechenden Momentanintensität und bei einer der Grenztemperatur entsprechenden Temperatur ein Plasma ausbilden. Hierhinter steckt die Überlegung, dass die zur Ausbildung eines Plasmas aus bestimmten Partikeln nötige Momentanintensität im kalten, festen Zustand der Partikel am größten ist und deutlich abnimmt, wenn die Partikel bereits erwärmt und/oder aufgeweicht sind. Wenn eine Grenztemperatur festgelegt wird, sind in einer konkreten Anwendung tendenziell mehr Materialien für die Partikel verwendbar. Zu denjenigen Materialien, die bei der zur Verfügung stehenden Momentanintensität bereits bei Raumtemperatur ein Plasma ausbilden, gesellen sich noch diejenigen, die bei der gleichen Momentanintensität erst bei höheren Temperaturen bis zu der Grenztemperatur ein Plasma ausbilden.

Die Grenztemperatur kann beispielsweise eine Schmelz- oder Siedetemperatur der Partikel sein. Wenn die Partikel beispielsweise aufgeschmolzen sind, ist die thermische Leitfähigkeit des Partikelmaterials tendenziell reduziert. Damit ist unter Einwirkung der Laserstrahlung die zeitlich gemittelte Oberflächentemperatur der Partikel im Vergleich zu deren festem Zustand erhöht, was wiederum die Ausbildung eines Plasmas im Nahbereich der Partikel begünstigt.

In einer besonders vorteilhaften Ausgestaltung können Partikel aus einem Material gewählt werden, das für die Wellenlänge der Laserstrahlung unter Bedingungen, bei denen noch kein Plasma vorliegt, einen Transmissionsgrad, einen Reflexionsgrad oder einen Absorptionsgrad von 0,9 oder mehr hat. Hierhinter steckt die Überlegung, dass Materialien, die sich in Bezug auf die Wellenlänge der Laserstrahlung in irgendeiner Weise optisch besonders ausgezeichnet verhalten, gute Kandidaten dafür sind, von der Laserstrahlung zur Ausbildung eines Plasmas veranlasst zu werden. Wenn ein Plasma vorliegt, verhält sich dieses im Vergleich zum ursprünglichen Material völlig anders.

Tröpfchen aus Galinstan, die beispielsweise als Partikel verwendet werden können, haben den Vorteil, dass Galinstan eine deutlich niedrigere Siedetemperatur besitzt als feste Materialien, wie etwa Kohlenstoff. Dementsprechend ist ein mit der Ausbildung eines Plasmas einhergehender nichtlinearer Streueffekt bereits bei deutlich geringeren Momentanintensitäten zu erwarten.

Galistan lässt sich beispielsweise mit Ultraschall in dem Lösungsmittel sehr fein dispergieren. Wenn die Ultraschallquelle intensiv genug ist, eine durch die Oberflächenspannung von Galinstan vorgegebene Grenze zu überwinden, lassen sich auch nanoskopische Größenordnungen der Tröpfchen erreichen. Dies ist vorteilhaft im Hinblick auf die Absorption, bzw. den kollektiven Oberflächenanteil, unter streifendem Einfall, sowie auch im Hinblick auf eine Phasentrennung auf Grund der Dichteunterschiede.

Zum feinen Zerstäuben metallhaltiger Tröpfchen kann beispielsweise deren Rayleigh-Instabilität ausgenutzt werden. Hierzu kann beispielsweise die metallhaltige Flüssigkeit durch eine auf hinreichend hohem negativem Potential befindliche elektrisch leitfähige Kapillare in das Lösungsmittel gedrückt werden, so dass bei gleicher Ultraschallintensität kleinere Tröpfchen entstehen. Darüber hinaus wirken die elektrostatischen Abstoßungskräfte zwischen den metallhaltigen Tröpfchen intrinsisch einer Koagulation dieser Tröpfchen entgegen, ohne dass die Oberflächen der Tröpfchen bzw. sonstigen Partikel hierfür speziell funktionalisiert werden müssen.

Beispielsweise können Partikel aus Bariumsulfat BaSO₄, Kalziumsulfat CaSO₄, Aluminiumoxid Al₂O₃, Titanoxid TiO₂, Zirkonoxid ZrO₂ und/oder Bornitrid BN gewählt werden. Diese Materialien sehen bei Bestrahlung mit weißem sichtbarem Licht weiß oder durchsichtig aus. Sie haben somit für viele Wellenlängen einen guten Reflexionsgrad, bzw. einen guten Transmissionsgrad.

Alternativ oder auch in Kombination können beispielsweise Partikel aus Kohlenstoff, Siliziumcarbid SiC, Borcarbid B₄C und/oder Wolframcarbid WC gewählt werden. Diese Materialien sehen bei Bestrahlung mit weißem sichtbarem Licht schwarz aus. Sie haben somit für viele Wellenlängen einen guten Absorptionsgrad. Hierbei kann speziell Kohlenstoff in verschiedenen Formen vorliegen, beispielsweise als Diamant, als Graphit oder als Industrieruß.

Insbesondere Kombinationen von Materialien, die im Zustand ohne Plasma reflektierend oder durchsichtig sind, mit Materialien, die im Zustand ohne Plasma absorbierend sind, sind vorteilhaft. Je vielfältiger bzw. unterschiedlicher die Wechselwirkungspartner im Fluid sind, desto schwieriger fällt es dem in den Rückraum eindringenden Laserpuls, dort einzudringen und sich ggfs. je nach Anzahldichte der Wechselwirkungspartner in der ursprünglichen Strahlrichtung auszubreiten. Gerade mit Kombinationen von unterschiedlichen Wechselwirkungspartnern lässt sich die Wellenfront des Laserpulses dephasieren, da die Partikel im Strahlungsfeld zufällig verteilt sind und die Wechselwirkung mit dem Laserlicht materialabhängig ist. So benötigen unterschiedliche Materialien beispielsweise unterschiedliche Momentanintensitäten, um ein Plasma auszubilden. Auch die Lebensdauern innerer Anregungen sind materialabhängig. Die hohe Energiestromdichte in der ursprünglichen Strahlrichtung hängt aber wesentlich davon ab, dass die Wellenfront der Laserstrahlung in Phase ist. Hierhinter steckt die Überlegung, dass die unterschiedlichen Wechselwirkungspartner die Lichtgeschwindigkeit lokal ändern, wobei die Abhängigkeiten dieser Änderung insbesondere von der (lokalen) Intensität sowie von der verwendeten Wellenlänge des Lasers für unterschiedliche Typen von Wechselwirkungspartnern verschieden sind.

In einer weiteren besonders vorteilhaften Ausgestaltung wird ein Lösungsmittel mit einem Tensid gewählt. Auf diese Weise kann in dem Lösungsmittel eine größere Menge an Partikeln dispergiert werden, so dass ein größerer Anteil der Laserstrahlung durch das Plasma an der Ausbreitung in der ursprünglichen Strahlrichtung gehindert werden kann.

In einer weiteren besonders vorteilhaften Ausgestaltung wird ein Lösungsmittel mit einer Kohlenwasserstoffverbindung gewählt. Diese Kohlenwasserstoffverbindung greift das Material des Werkstücks nicht an und wird unter der Einwirkung der Laserstrahlung zu keiner das Material des Werkstücks angreifenden Substanz umgewandelt. Insbesondere enthält eine reine Kohlenwasserstoffverbindung keinen Sauerstoff, der bei einem Aufbrechen des Moleküls frei werden und das Material des Werkstücks schädigen könnte. Weiterhin kann in Kohlenwasserstoffverbindungen tendenziell eine größere Vielfalt von Partikeln dispergiert werden als in wässrigen Lösungsmitteln.

Alternativ oder auch in Kombination hierzu kann das Lösungsmittel einen Alkohol enthalten. Auch in Alkoholen kann eine größere Vielfalt von Partikeln dispergiert werden als in wässrigen Lösungsmitteln. Als Lösungsmittel kann beispielsweise auch eine Emulsion aus einer polaren Flüssigkeit, wie etwa einem Alkohol, einer unpolaren Flüssigkeit, wie etwa einem Alkan, und einem Tensid gewählt werden.

Beispielsweise kann ein Lösungsmittel mit einem Alkan oder einem Gemisch von Alkanen gewählt werden. Je nach Kettenlänge haben Alkane einen vergleichsweise hohen Siedepunkt. Ein Beispiel für ein Lösungsmittel auf der Basis von Alkanen ist Paraffinöl. Dies ist ein Gemisch höherer Alkane mit der Summenformel CₙH₂ₙ₊₂, mit n zwischen 18 und 32.

In einer weiteren besonders vorteilhaften Ausgestaltung wird ein Lösungsmittel mit einer Kohlenwasserstoffverbindung gewählt, die eine an mindestens einem Ende terminierte und/oder funktionalisierte Kohlenstoffkette umfasst. Die Terminierung bzw. Funktionalisierung kann das Dispergieren bestimmter Partikel in dem Lösungsmittel begünstigen. Es ist dann nur noch eine geringere Konzentration eines zusätzlichen Tensids erforderlich, um die Partikel zu dispergieren, oder ein solches zusätzliches Tensid kann sogar komplett entfallen. So begünstigt beispielsweise ein Benzolring als Funktionalisierung das Dispergieren von Kohlenstoffpartikeln.

Besonders vorteilhaft wird ein Lösungsmittel mit Dodecylbenzol C₁₈H₃₀ gewählt. In dieser beispielsweise als Transformatorenöl verwendeten Substanz lässt sich zerkleinerter Kohlenstoff besonders gut dispergieren.

Um Partikel besser in dem Lösungsmittel zu dispergieren, können sie beispielsweise elektrisch aufgeladen werden.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100;
Figur 2 Auftreffen der Laserstrahlung 2 auf Partikel 4a im Rückraum 3 nach Durchdringen des Bereichs 1a des Werkstücks 1;
Figur 3 Ausbildung des Plasmas 5 und diffuse Streuung 2a der Laserstrahlung 2 an dem Plasma 5.

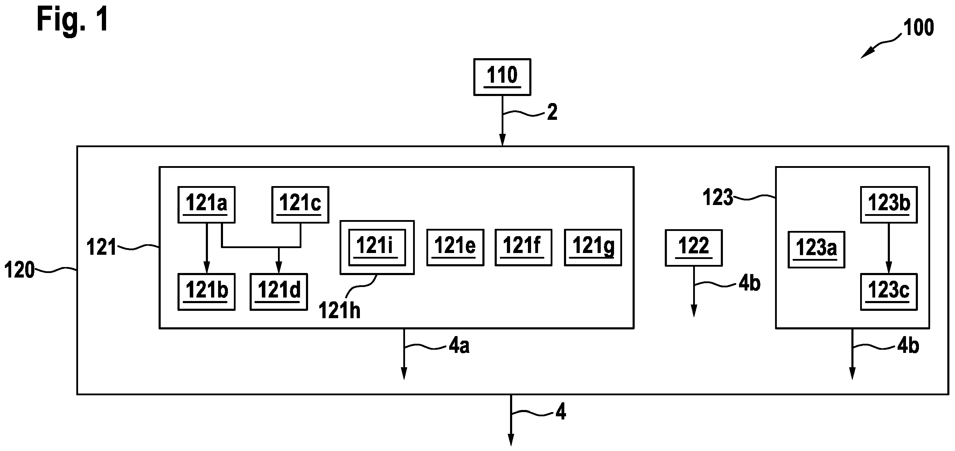

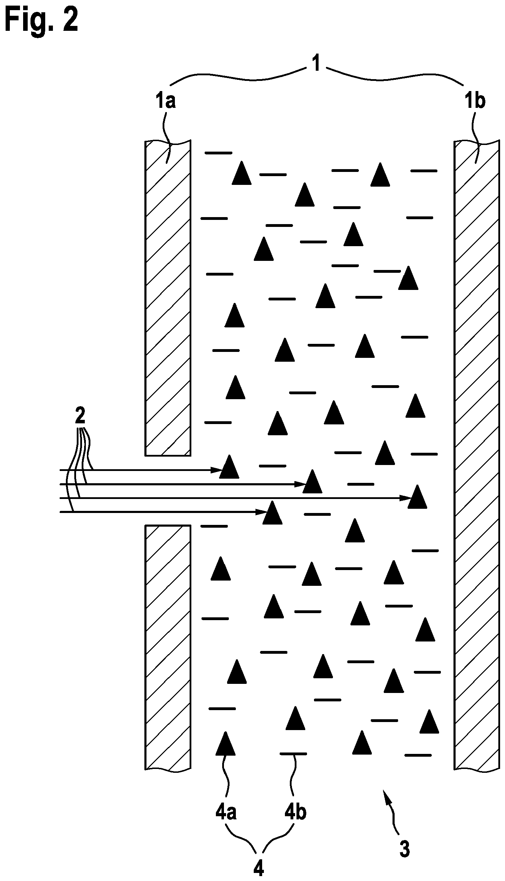

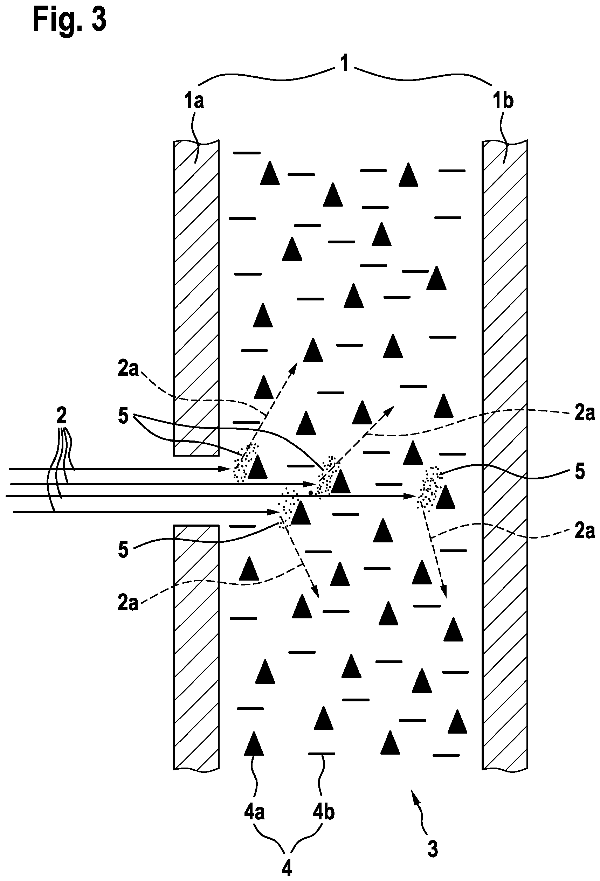

Figur 1 ist ein schematisches Ablaufdiagramm eines Ausführungsbeispiels des Verfahrens 100. In Schritt 110 des Verfahrens 100 wird zwecks Laserbohren oder Laserschneiden eines Werkstücks 1 Material dieses Werkstücks 1 mit gepulster Laserstrahlung 2 abgetragen. In Schritt 120 wird in einem in Strahlrichtung hinter einem zu durchdringenden Bereich 1a des Werkstücks 1 gelegenen Rückraum 3 ein Fluid 4 vorgelegt, das den Durchgang der Laserstrahlung 2 zumindest teilweise verhindert. Die geometrische Anordnung von Werkstück 1, Laserstrahlung 2, Rückraum 3 und Fluid 4 ist in den Figuren 2 und 3 näher dargestellt.

Das Fluid 4 umfasst Partikel 4a, die in einem Lösungsmittel 4b dispergiert sind. Gemäß Block 121 werden Partikel 4a gewählt, die unter der Wirkung der in den Rückraum 3 eintretenden Laserstrahlung 2 ein Plasma ausbilden, so dass dieses Plasma 5 den Durchgang der Laserstrahlung 2 zumindest teilweise verhindert.

Innerhalb des Kastens 121 sind verschiedene beispielhafte Möglichkeiten und Kriterien dargestellt, nach denen die Partikel 4a ausgewählt werden können.

Gemäß Block 121a kann anhand des zeitlichen Intensitätsverlaufs der Pulse der Laserstrahlung 2 ein Schwellwert für die Momentanintensität festgelegt werden. Es können dann gemäß Block 121b Partikel 4a gewählt werden, die spätestens bei einer diesem Schwellwert entsprechenden Momentanintensität ein Plasma 5 ausbilden.

Dies lässt sich gemäß Block 121c noch verfeinern, indem zusätzlich eine Grenztemperatur festgelegt wird. Es können dann gemäß Block 121d Partikel 4a gewählt werden, die spätestens bei einer dem Schwellwert entsprechenden Momentanintensität und bei einer der Grenztemperatur entsprechenden Temperatur ein Plasma 5 ausbilden.

Gemäß Block 121e können Partikel 4a aus einem Material gewählt werden, das für die Wellenlänge der Laserstrahlung 2 unter Bedingungen, bei denen noch kein Plasma 5 vorliegt, einen Transmissionsgrad, einen Reflexionsgrad oder einen Absorptionsgrad von 0,9 oder mehr hat.

Gemäß Block 121f können Partikel 4a aus Bariumsulfat BaSO₄, Kalziumsulfat CaSO₄, Aluminiumoxid Al₂O₃, Titanoxid TiO₂, Zirkonoxid ZrO₂ und/oder Bornitrid BN gewählt werden.

Gemäß Block 121g können Partikel 4a aus Kohlenstoff, Siliziumcarbid SiC, Borcarbid B₄C und/oder Wolframcarbid WC gewählt werden.

Gemäß Block 121h können metallhaltige Tröpfchen als Partikel 4a gewählt werden. Diese können gemäß Block 121i beispielsweise Gallium oder Galinstan enthalten.

Innerhalb des Kastens 120 sind weiterhin mehrere beispielhafte Möglichkeiten und Kriterien aufgezeichnet, nach denen das Lösungsmittel 4b gewählt werden kann.

Gemäß Block 122 kann ein Lösungsmittel 4b mit einem Tensid gewählt werden, um mehr Partikel 4a in einer gegebenen Menge Lösungsmittel 4b dispergieren zu können.

Gemäß Block 123 kann ein Lösungsmittel mit einer Kohlenwasserstoffverbindung gewählt werden, die das Material des Werkstücks 1 nicht angreift und die unter der Einwirkung der Laserstrahlung 2 zu keiner das Material des Werkstücks 1 angreifenden Substanz umgewandelt wird.

Hierbei kann insbesondere beispielsweise gemäß Block 123a ein Lösungsmittel 4b mit einem Alkan oder einem Gemisch von Alkanen gewählt werden.

Alternativ oder in Kombination hierzu kann gemäß Block 123b ein Lösungsmittel 4b mit einer Kohlenwasserstoffverbindung, die eine an mindestens einem Ende terminierte und/oder funktionalisierte Kohlenstoffkette umfasst, gewählt werden. Das Lösungsmittel 4b kann insbesondere beispielsweise gemäß Block 123c Dodecylbenzol C₁₈H₃₀ enthalten.

Figur 2 zeigt schematisch eine beispielhafte Anwendungssituation des Verfahrens 100 in Schnittzeichnung. Das Werkstück 1 ist in diesem Beispiel ein Rohr, das in einem Bereich 1a seiner Wandung mit einem Loch zu versehen ist, ohne dass der diesem Loch gegenüber liegende Bereich 1b geschädigt wird. Zu diesem Zweck ist der Rückraum 3 im Inneren mit einem Fluid 4 gefüllt, das in einem Lösungsmittel 4b dispergierte Partikel 4a enthält. Die Konzentration und Größe der Partikel 4a ist in Figur 2 stark übertrieben eingezeichnet.

In der in Figur 2 gezeigten Momentaufnahme hat die Laserstrahlung 2 gerade den Bereich 1a des Werkstücks 1 durchdrungen und somit das gewünschte Loch fertiggestellt. Die Laserstrahlung 2 trifft nun auf die Partikel 4a in dem Fluid 4 auf.

Wie in Figur 3 dargestellt ist, hat dies die Wirkung, dass die Partikel 4a ein Plasma 5 ausbilden. Dabei bildet sich das Plasma 5 bevorzugt auf der jeweils der Laserstrahlung 2 zugewandten Seite der Partikel 4a, wobei dies nicht ausschließt, dass sich sehr kleine Partikel 4a kurzzeitig vollständig in Plasma umsetzen.

Wenn nun weitere Laserstrahlung 2 auf dieses Plasma 5 auftrifft, wird sie zumindest teilweise reflektiert und/oder gestreut, und somit in diffuses, sich in alle Richtungen ausbreitendes Licht 2a umgewandelt. Dieses diffuse Licht 2a ist im Bereich 1b des Werkstücks 1 nicht mehr so intensiv, dass dieser Bereich 1b ungewollt geschädigt wird.

Ob sich die Plasmazonen 5 der jeweiligen plasmaausbildenden Partikel 4a überlappen, hängt stark von der (lokalen) Anzahldichte der Partikel 4a, den jeweiligen Materialien sowie den Charakteristika der einzelnen Laserpulse und der Laserstrahlung 2 insgesamt ab. Zusätzlich zu den Plasmazonen 5 können beispielsweise Dampfblasen des Lösungsmittels 4b entstehen. Es kann also durch verschiedenste, auf unterschiedlichen Zeitskalen ablaufende Prozesse die Energie der Laserstrahlung 2 (überwiegend) in thermische Prozesse dissipiert werden.

## Patentansprüche

1. Verfahren (100) zum Laserbohren oder Laserschneiden eines Werkstücks (1), wobei Material des Werkstücks (1) mit gepulster Laserstrahlung (2) abgetragen wird (110), wobei in einem in Strahlrichtung hinter einem zu durchdringenden Bereich (1a) des Werkstücks (1) gelegenen Rückraum (3), in den die Laserstrahlung (2) eindringt, wenn sie diesen Bereich (1a) durchdrungen hat, ein Fluid (4) vorgelegt wird (120), das den Durchgang der Laserstrahlung (2) zumindest teilweise verhindert, wobei dieses Fluid (4) Partikel (4a) umfasst, die in einem Lösungsmittel (4b) dispergiert sind, **dadurch gekennzeichnet, dass** Partikel (4a) gewählt werden (121), die unter der Wirkung der in den Rückraum (3) eintretenden Laserstrahlung (2) ein Plasma (5) ausbilden, so dass dieses Plasma (5) den Durchgang der Laserstrahlung (2) zumindest teilweise verhindert.

2. Verfahren (100) nach Anspruch 1, wobei anhand des zeitlichen Intensitätsverlaufs der Pulse der Laserstrahlung (2) ein Schwellwert für die Momentanintensität festgelegt wird (121a) und wobei Partikel (4a) gewählt werden (121b), die spätestens bei einer diesem Schwellwert entsprechenden Momentanintensität ein Plasma (5) ausbilden.

3. Verfahren (100) nach Anspruch 2, wobei zusätzlich eine Grenztemperatur festgelegt wird (121c) und wobei Partikel (4a) gewählt werden (121d), die spätestens bei einer dem Schwellwert entsprechenden Momentanintensität und bei einer der Grenztemperatur entsprechenden Temperatur ein Plasma (5) ausbilden.

4. Verfahren (100) nach einem der Ansprüche 1 bis 3, wobei Partikel (4a) aus einem Material gewählt werden (121e), das für die Wellenlänge der Laserstrahlung (2) unter Bedingungen, bei denen noch kein Plasma (5) vorliegt, einen Transmissionsgrad, einen Reflexionsgrad oder einen Absorptionsgrad von 0,9 oder mehr hat.

5. Verfahren (100) nach einem der Ansprüche 1 bis 4, wobei metallhaltige Tröpfchen als Partikel (4a) gewählt werden (121h).

6. Verfahren (100) nach Anspruch 5, wobei Tröpfchen mit Gallium oder Galinstan als Partikel (4a) gewählt werden (121i).

7. Verfahren (100) nach einem der Ansprüche 1 bis 6, wobei Partikel (4a) aus Bariumsulfat BaSO₄, Kalziumsulfat CaSO₄, Aluminiumoxid Al₂O₃, Titanoxid TiO₂, Zirkonoxid ZrO₂ und/oder Bornitrid BN gewählt werden (121f).

8. Verfahren (100) nach einem der Ansprüche 1 bis 7, wobei Partikel (4a) aus Kohlenstoff, Siliziumcarbid SiC, Borcarbid B₄C und/oder Wolframcarbid WC gewählt werden (121g).

9. Verfahren (100) nach einem der Ansprüche 1 bis 8, wobei ein Lösungsmittel (4b) mit einem Tensid gewählt wird (122).

10. Verfahren (100) nach einem der Ansprüche 1 bis 9, wobei ein Lösungsmittel (4b) mit einer Kohlenwasserstoffverbindung, die das Material des Werkstücks (1) nicht angreift und die unter der Einwirkung der Laserstrahlung (2) zu keiner das Material des Werkstücks (1) angreifenden Substanz umgewandelt wird, und/oder mit einem Alkohol, gewählt wird (123).

11. Verfahren (100) nach Anspruch 10, wobei ein Lösungsmittel (4b) mit einem Alkan oder einem Gemisch von Alkanen gewählt wird (123a).

12. Verfahren (100) nach einem der Ansprüche 10 bis 11, wobei ein Lösungsmittel (4b) mit einer Kohlenwasserstoffverbindung, die eine an mindestens einem Ende terminierte und/oder funktionalisierte Kohlenstoffkette umfasst, gewählt wird (123b).

13. Verfahren (100) nach Anspruch 12, wobei ein Lösungsmittel (4b) mit Dodecylbenzol C₁₈H₃₀ gewählt wird (123c).

## Claims

1. Method (100) of laser drilling or laser cutting of a workpiece (1), where material from the workpiece (1) is removed (110) with pulsed laser radiation (2), where a charge (120) of a fluid (4) in a rear space (3) behind, in beam direction, a region (1a) of the workpiece (1) that is to be pierced and into which the laser radiation (2) penetrates once it has passed through this region (1a) at least partly prevents the passage of the laser radiation (2), where this fluid (4) comprises particles (4a) dispersed in a solvent (4b), **characterized in that** particles (4a) chosen (121) are those that form a plasma (5) under the action of the laser radiation (2) entering the rear space (3), such that this plasma (5) at least partly prevents the passage of the laser radiation (2).

2. Method (100) according to Claim 1, wherein the instantaneous progression of intensity of the pulses of laser radiation (2) is used to fix (121a) a threshold value for the instantaneous intensity, and wherein particles (4a) chosen (121b) are those that form a plasma (5) no later than attainment of an instantaneous intensity corresponding to that threshold value.

3. Method (100) according to Claim 2, wherein a limiting temperature is additionally fixed (121c), and wherein particles (4a) chosen (121d) are those that form a plasma (5) no later than at an instantaneous intensity corresponding to the threshold value and at a temperature corresponding to the limiting temperature.

4. Method (100) according to any of Claims 1 to 3, wherein particles (4a) chosen (121e) are those composed of a material having a transmittance, a reflectance or an absorbance of 0.9 or more for the wavelength of the laser radiation (2) under conditions under which no plasma (5) has formed yet.

5. Method (100) according to any of Claims 1 to 4, wherein particles (4a) chosen (121h) are metal-containing droplets.

6. Method (100) according to Claim 5, wherein particles (4a) chosen (121i) are droplets comprising gallium or Galinstan.

7. Method (100) according to any of Claims 1 to 6, wherein particles (4a) of barium sulfate BaSO₄, potassium sulfate CaSO₄, aluminium oxide Al₂O₃, titanium oxide TiO₂, zirconium oxide ZrO₂ and/or boron nitride BN are chosen (121f).

8. Method (100) according to any of Claims 1 to 7, wherein particles (4a) of carbon, silicon carbide SiC, boron carbide B₄C and/or tungsten carbide WC are chosen (121g).

9. Method (100) according to any of Claims 1 to 8, wherein a solvent (4b) comprising a surfactant is chosen (122) .

10. Method (100) according to any of Claims 1 to 9, wherein a solvent (4b) comprising a hydrocarbon compound that does not attack the material of the workpiece (1) and is not converted under the action of the laser radiation (2) to a substance that attacks the material of the workpiece (1) and/or comprising an alcohol is chosen (123).

11. Method (100) according to Claim 10, wherein a solvent (4b) comprising an alkane or a mixture of alkanes is chosen (123a).

12. Method (100) according to either of Claims 10 and 11, wherein a solvent (4b) comprising a hydrocarbon compound comprising a carbon chain terminated and/or functionalized at at least one end is chosen (123b).

13. Method (100) according to Claim 12, wherein a solvent (4b) comprising dodecylbenzene C₁₈H₃₀ is chosen (123c).

## Revendications

1. Procédé (100) pour le perçage au laser ou le découpage au laser d'une pièce à usiner (1), de la matière de la pièce à usiner (1) étant enlevée (110) par rayonnement laser pulsé (2), un fluide (4) qui empêche au moins partiellement le passage du rayonnement laser (2) étant disposé au préalable (120) dans un espace arrière (3) situé après, dans la direction du faisceau, une zone (1a) à pénétrer de la pièce à usiner (1), dans lequel le rayonnement laser (2) pénètre lorsqu'il a traversé cette zone (1a), ce fluide (4) comprenant des particules (4a) qui sont dispersées dans un solvant (4b), **caractérisé en ce que** sont choisies (121) des particules (4a) qui forment un plasma (5) sous l'effet du rayonnement laser (2) entrant dans l'espace arrière (3), de sorte que ce plasma (5) empêche au moins partiellement le passage du rayonnement laser (2).

2. Procédé (100) selon la revendication 1, dans lequel une valeur seuil de l'intensité momentanée est déterminée (121a) à l'aide de l'évolution dans le temps de l'intensité des impulsions du rayonnement laser (2) et dans lequel sont choisies (121b) des particules (4a) qui au plus tard lorsqu'est atteinte une intensité momentanée correspondant à cette valeur seuil forment un plasma (5).

3. Procédé (100) selon la revendication 2, dans lequel est en outre déterminée une température limite (121c) et sont choisies (121d) des particules (4a) qui au plus tard lorsqu'est atteinte une intensité momentanée correspondant à la valeur seuil et lorsqu'est atteinte une température correspondant à la température limite forment un plasma (5).

4. Procédé (100) selon l'une quelconque des revendications 1 à 3, dans lequel sont choisies (121e) des particules (4a) à base d'une matière qui a un degré de transmission, un degré de réflexion ou un degré d'absorption de 0,9 ou plus pour la longueur d'onde du rayonnement laser (2) dans des condictions dans lesquelles aucun plasma (5) n'est encore présent.

5. Procédé (100) selon l'une quelconque des revendications 1 à 4, dans lequel des goutellettes contenant du métal sont choisies (121h) en tant que particules (4a).

6. Procédé (100) selon la revendication 5, dans lequel des gouttelettes comportant du gallium ou du galinstan sont choisies (121i) en tant que particules (4a).

7. Procédé (100) selon l'une quelconque des revendications 1 à 6, dans lequel sont choisies (121f) des particules (4a) à base de sulfate de baryum BaSO₄, sulfate de calcium CaSO₄, oxyde d'aluminium Al₂O₃, oxyde de titane TiO₂, oxyde de zirconium ZrO₂ et/ou nitrure de bore BN.

8. Procédé (100) selon l'une quelconque des revendications 1 à 7, dans lequel sont choisies (121g) des particules (4a) à base de carbone, carbure de silicium SiC, carbure de bore B₄C et/ou carbure de tungstène WC.

9. Procédé (100) selon l'une quelconque des revendications 1 à 8, dans lequel est choisi (122) un solvant (4b) comportant un tensioactif.

10. Procédé (100) selon l'une quelconque des revendications 1 à 9, dans lequel est choisi (123) un solvant (4b) comportant un composé hydrocarboné qui n'attaque pas la matière de la pièce à usiner (1) et qui, sous l'effet du rayonnement laser (2), n'est converti en aucune substance attaquant la matière de la pièce à usiner (1).

11. Procédé (100) selon la revendication 10, dans lequel est choisi (123a) un solvant (4b) comportant un alcane ou un mélange d'alcanes.

12. Procédé (100) selon l'une quelconque des revendications 10 et 11, dans lequel est choisi (123b) un solvant (4b) comportant un composé hydrocarboné qui comprend une chaîne carbonée portant une fonctionnalisation et/ou une terminaison à au moins une extrémité.

13. Procédé (100) selon la revendication 12, dans lequel est choisi (123c) un solvant (4b) comportant du dodécylbenzène C₁₈H₃₀.
